# EUROPEAN PATENT SPECIFICATION

(11) **EP 2 541 385 B1**
(45) Date of publication and mention of the grant of the patent: **02.08.2017**
(21) Application number: 12170436.5
(22) Date of filing: 01.06.2012
(51) Int. Cl.: G06F 3/048

(54) **Information processing apparatus, information processing method, program and remote control system**
Informationsverarbeitungsvorrichtung, Informationsverarbeitungsverfahren, Programm und Fernsteuerungssystem
Appareil de traitement d'informations, procédé de traitement d'informations, programme et système de traitement d'informations

(30) Priority: 29.06.2011 JP 2011144059
(43) Date of publication of application: 02.01.2013
(73) Proprietor: Sony Corporation, Tokyo 108-0075 (JP)
(72) Inventor: Ito, Shin, Minato-ku, Tokyo 108-0075 (JP); Ohashi, Yoshinori, Minato-ku, Tokyo 108-0075 (JP); Yamada, Eiju, Minato-ku, Tokyo 108-0075 (JP)
(74) Representative: Witte, Weller & Partner Patentanwälte mbB

(56) References cited:
- EP-A1- 1 873 621
- EP-A2- 2 339 442
- WO-A1-2011/040165
- WO-A2-2010/018579
- US-A1- 2009 295 743

## Description

The present disclosure relates to an information processing apparatus, an information processing method, a program and a remote control system.

In recent years, a portable type information processing apparatus provided with a touch panel display becomes popular. A user can carry out a predetermined operation input via a graphical user interface (GUI) to be displayed on a touch panel display (see Japanese Patent Application Laid-Open No. 2011-77863, for example).

A user generally holds an apparatus with a dominant hand and carries out an operation input to a touch panel with the dominant hand or holds the apparatus with a non-dominant hand and carries out the operation input to the touch panel with the dominant hand. With a structure of the GUI, for example, an operability of the touch panel is varied depending on an operation state in some cases, for example, the operation can easily be carried out with one of the hands and is hard to perform with the other hand, or the operation can easily be carried out with both hands and is hard to perform with one of them. For this reason, the operability of the information processing apparatus can be deteriorated in some cases. Therefore, Japanese Patent Application Laid-Open No. 2011-76521 (WO 2011/040165) describes that the operation state with one of hands or both hands is decided and the structure of the GUI is changed depending on a result of the decision.

However, Japanese Patent Application Laid-Open No. 2011-76521 describes that a GUI such as a displayed icon is moved according to an operation state. In a user operation such as a flick operation, however, a track is varied depending on an operation with a right hand, a left hand or both of the hands. For this reason, the operation may be erroneously detected in some cases.

US 2009/0295743 describes a mobile terminal provided with a touch screen for displaying and inputting data, a detection unit for detecting the input path of the diagonal line upon input through the touch screen, a set unit for setting the user's operating hand based on the input path, and the display control unit for displaying the display mode determined based on the operating hand.

EP 2 339 442 A2, which is state of the art pursuant to Article 54(3) EPC, discloses an apparatus including a touch panel for detecting a moving start point and a moving end point of a pointer, a first determination unit for, while an apparatus is being gripped with a first hand, determining whether the apparatus is being one-handedly operated with a finger of the first hand as the pointer, a setting unit for, when the apparatus is being one-handedly operated, setting a determination region made of two or more regions to each of which a different moving direction is assigned, by using two or more curved lines which are previously obtained by approximating to a moving trajectory of the pointer during one-handed operation and are set with the detected moving start point as an intersection, and a second determination unit for determining a moving direction assigned to a region in which the detected moving end point is positioned as the operation direction.

Therefore, there is desired the technique capable of reliably suppressing an erroneous detection caused by a user operation (an operation to be carried out with a right hand, a left hand or both of the hands).

Various respective aspects and features of the invention are defined in the appended claims. Combinations of features from the dependent claims may be combined with features of the independent claims as appropriate and not merely as explicitly set out in the claims.

In one example, an information processing apparatus is provided. The information processing apparatus may include a processor which may be configured to detect an operation performed on a touch device by a user, where the touch device may have a number of regions (e. g., touch sensitive regions that may form a user interface the touch device) associated with said touch device. The processor may then determine whether the operation was performed on the touch device via a right hand, a left hand, or both hands by the user and, then modify at least one region associated with the touch device depending upon whether the operation was performed by the right hand, the left hand, or both hands on the touch device.

In another example, the touch device may be provided as part of a display (e.g., a touch screen display) and the processor may be further configured to display one or more graphical user interface components of a graphical user interface on the display based upon one or more of the number of regions associated with the touch device.

In one example, the number of regions associated with the touch device may include at least one deciding region, and the processor may be further configured to modify the at least one deciding region depending upon whether the operation was performed via the left hand or the right hand by the user. In another aspect, the at least one deciding region may include a plurality of deciding regions, where the plurality of deciding regions may include an up deciding region, a down deciding region, a right deciding region, and a left deciding region for detecting operations performed on the touch device by the user in an upward, downward, rightward, or leftward directions respectively.

In yet another example, the number of regions associated with the touch device may also include at least one invalid region for detecting invalid operations performed on the touch device by the user, and the processor may be further configured to modify the at least one region associated with the touch device by modifying the at least one invalid region depending upon whether the operation was performed on the touch device via the left hand or the right hand by the user.

In another example, processor may be further configured to modify a central position of a cursor depending upon whether the operation was performed on the touch device via the left hand or the right hand by the user.

In still another example, the processor may also be configured to select an operation command from a plurality of operation commands based on the operation performed on the touch device by the user and, transmit the selected operation command to an external receiver for further processing.

In one example, the processor may be further configured to determine a gesture performed by the user by detecting a motion of the information processing apparatus; determine whether the gesture was performed via the left hand, the right hand, or both hands of the user based on the motion of the information processing apparatus and, change an algorithm for detecting the motion of the information processing apparatus depending upon whether the gesture was performed via the left hand, the right hand, or both hands by the user.

In another example, the processor may be further configured to determine a start coordinate associated with a first point of contact on the touch device during the operation performed on the touch device and determine an end coordinate associated with a second point of contact on the touch device during the operation performed on the touch device. The processor may then determine whether the operation was performed on the touch device via the right hand, the left hand, or both hands by the user based on calculating a difference between the end coordinate and the start coordinate.

Furthermore, the processor may also be configured to determine an absolute value of the difference between the end coordinate and the start coordinate, compare the absolute value to a first threshold value, and, when a comparison result indicates that the absolute value is less than the first threshold value, determine that the operation was performed on the touch device via both hands by the user.

When the comparison result indicates that the absolute value is greater than or equal to the first threshold value, the processor may be further configured to determine whether the absolute value is greater than or equal to a second threshold value. When a determination result indicates that the absolute value is greater than or equal to the second threshold value, the processor may further determine if the difference between the end coordinate and the start coordinate is positive or negative. If a difference result indicates that the difference between the end coordinate and the start coordinate is positive, the processor may determine that the operation was performed on the touch device via the right hand by the user. However, when the difference result indicates that the difference between the end coordinate and the start coordinate is negative, the processor may determine that the operation was performed on the touch device via the left hand by the user.

In one example, the start coordinate and the end coordinate may be horizontal coordinates. In another aspect, the start coordinate and the end coordinate may be vertical coordinates.

A computer-implemented method is provided. The method may include detecting an operation performed on a touch device of an information processing apparatus by a user, where the touch device has a number of regions associated with said touch device. The method may further include determining, using a processor, whether the operation was performed on the touch device via a right hand, a left hand, or both hands by the user, and, modifying at least one region associated with the touch device depending upon whether the operation was performed by the right hand, the left hand, or both hands on the touch device.

A non-transitory computer-readable storage unit on which computer readable instructions of a program are stored is provided. The instructions, when executed by a processor, may configure the processor to detect an operation performed on a touch device of an information processing apparatus by a user, where the touch device may have a number of regions associated with said touch device. The instructions may further configure the processor to determine whether the operation was performed on the touch device via a right hand, a left hand, or both hands by the user, and, modify at least one region associated with the touch device depending upon whether the operation was performed by the right hand, the left hand, or both hands on the touch device.

According to the embodiments of the present disclosure described above, it is possible to reliably prevent an erroneous detection from being caused by an operation state of a user.

Embodiments of the invention will now be described with reference to the accompanying drawings, throughout which like parts are referred to by like references, and in which:
FIG. 1 is a view showing a remote controller system including a remote controller according to an embodiment of the present disclosure;
FIG. 2 is a block diagram showing a main functional structure of the remote controller according to the embodiment of the present disclosure;
FIG. 3 is a flow chart showing an operation of the remote controller;
FIG. 4 is a view for explaining the operation of the remote controller;
FIG. 5A is a schematic view showing an example of a UI in a left-handed operation;
FIG. 5B is a schematic view showing an example of the UI in a double-handed operation;
FIG. 5C is a schematic view showing an example of the UI in a right-handed operation;
FIG. 6 is a schematic view showing an example in which a position of a cursor Cur is displayed with a shift in a leftward and upward direction with respect to a point Dt where contact of a finger P is detected over a touch panel when it is decided that the right-handed operation is carried out;
FIG. 7 is a view showing a moving state of a finger depending on an operation state;
FIG. 8A is a view showing a moving direction of a finger which is detected in the right-handed operation;
FIG. 8B is a view showing a moving direction of a finger which is detected in the left-handed operation;
FIG. 8C is a view showing a moving direction of a finger which is detected in the double-handed operation;
FIG. 9 is a flow chart showing an example of a processing for deciding an operation state;
FIG. 10 is a schematic view showing another example in which the right-handed operation and the left-handed operation are detected; and
FIG. 11 is a flow chart showing a processing for changing a structure of the UI depending on the operation state.

### DETAILED DESCRIPTION OF THE EMBODIMENT

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

The description will be given in the following order.
1. Summary of Remote Controller System
2. Example of Structure of System
3. Operation of Remote Controller
4. Processing for Deciding Operation State
5. Processing for Changing UI

### [1. Summary of Remote Controller System]

A remote controller 100 according to an embodiment of the present disclosure will be described below. The present disclosure can also be applied to a portable type information processing apparatus such as a personal digital assistant (PDA) or a portable telephone which is provided with a touch panel display 101 in addition to the remote controller 100.

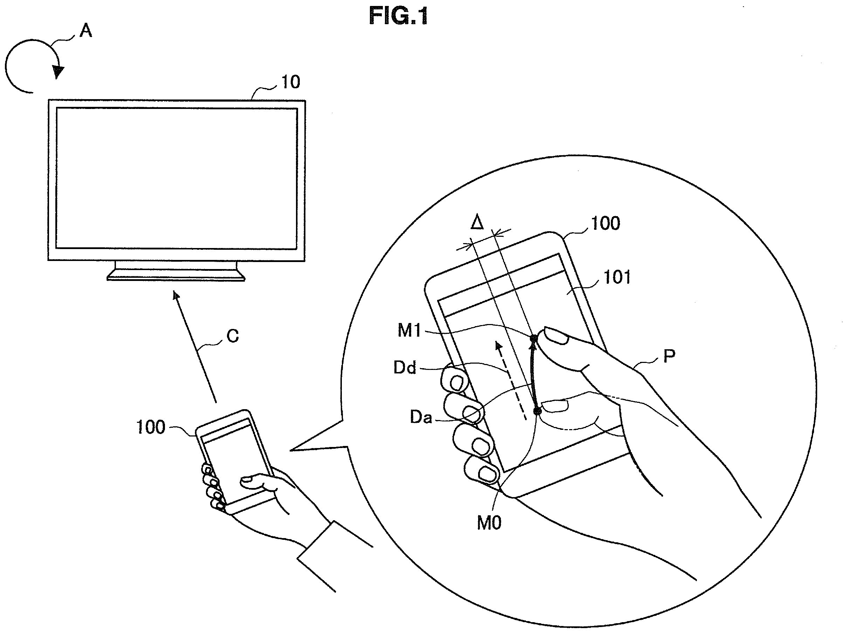

FIG. 1 is a view showing a remote controller system including the remote controller 100 according to an embodiment of the present disclosure. As shown in FIG. 1, the remote controller system includes the remote controller 100 provided with the touch panel display 101, and a television (display device) 10 to be operated through the remote controller 100. The television 10 is illustrated as an example of an electronic apparatus to be operated through the remote controller 100.

In the remote controller system, a cable communication or a radio communication is carried out from at least the remote controller 100 in a direction of the television 10. The communication between the remote controller 100 and the television 10 may be carried out directly or indirectly through, for example, a network (not shown).

The remote controller 100 displays, for example, an operating icon for operating the television 10 on the touch panel display 101. When an operation input for selecting the icon or the like is carried out, the remote controller 100 transmits a predetermined operation command C to the television 10 depending on the operation input. The television 10 receives the operation command C and carries out a predetermined operation A depending on the operation command C.

A user usually holds the remote controller 100 by a dominant hand and operates the touch panel display 101 by the dominant hand or holds the remote controller 100 by a different hand from the dominant hand and operates the touch panel display 101 by the dominant hand. Then, the remote controller 100 decides an operation state of the remote controller 100 at a predetermined time point, thereby changing a display of a GUI, for example, an operating icon.

In the decision of the operation state, the remote controller 100 designates a predetermined moving direction Dd, and detects a moving direction Da of a finger P to be moved over the touch panel display 101 in accordance with the designation. Thereafter, the remote controller 100 decides an operation state thereof based on a difference Δ between the designated moving direction Dd and the detected moving direction Da.

Description will be given about the case in which the remote controller 100 is held by a right hand to operate the touch panel display 101 with a thumb P of the right hand. In this case, even if the thumb P is to be moved in the straight upward direction Dd (in parallel with a panel surface) over the touch panel display 101, the moving direction Da of the thumb P is inclined in a rightward and upward direction due to a structure of the right hand. Accordingly, it is possible to detect the moving direction Da of the finger P to be moved in accordance with the designation, thereby deciding the operation state of the remote controller 100 based on the difference Δ between the designated moving direction Dd and the detected moving direction Da.

It is possible to carry out the operation of the television 10 by utilizing the touch panel display 101 of the remote controller 100. At this time, however, it is desirable that a user carry out the operation by watching only the television 10 without seeing the remote controller 100 at hand. For this reason, it is possible to utilize an operation which can be carried out over the touch panel display 101 without seeing the hand, for example, a flick or swipe operation.

In the present embodiment, in the remote controller 100 having the touch panel display 101 which can be operated without seeing the hand, the remote controller 100 decides whether the user holds the remote controller 100 by both of hands, a right hand or a left hand, and automatically switches an optimum user interface (UI) for both of the hands, the right hand or the left hand depending on a result of the decision. Consequently, it is possible to prevent a malfunction and to considerably improve an operability.

### [2. Example of Structure of System]

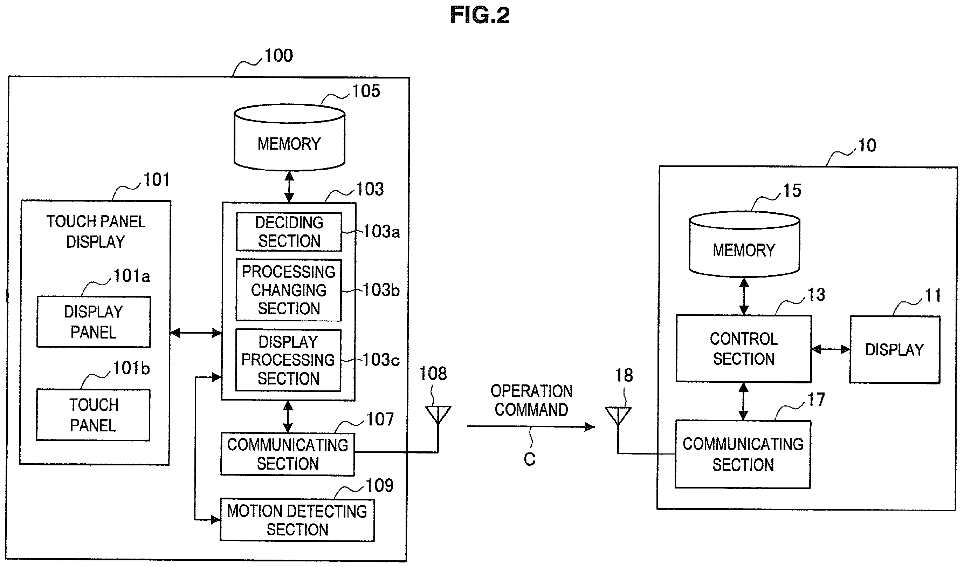

FIG. 2 shows functional structures of the remote controller 100 and the television 10. The remote controller 100 includes the touch panel display 101, a control section 103, a memory 105, a communicating section 107, and a motion detecting sensor 109. The television 10 includes a display 11, a control section 13, a memory 15 and a communicating section 17. FIG. 2 shows only a main functional structure according to an embodiment of the present disclosure.

First of all, the functional structure of the remote controller 100 will be described. The touch panel display 101 has a structure in which a touch panel or touch device 101b (detecting section) is laminated on a display panel 101a. For the display panel 101 a, a liquid crystal display (LCD) or the like is utilized. For the touch panel 101b, a panel of a resistive film type, an electrostatic capacity type, an ultrasonic type, an infrared type or the like is utilized. The display panel 101a and the touch device 101b may together constitute a touch screen display (e.g., touch panel 101). However, the present disclosure is applicable to any device that includes a touch sensitive surface (e.g., touch panel 101b), regardless of whether the device has a display (e.g., display panel 101a) or not.

The touch panel 101b detects a contact state of the finger P with a panel surface. In another embodiment, a proximity state of the finger P may be detected in place of the contact state or in addition to the contact state. The touch panel 101b supplies a contact signal to the control section 103 when the finger P comes in contact with the touch panel 101b, and supplies a cancel signal to the control section 103 when the finger P separates from the touch panel 101b.

Moreover, the touch panel or touch device 101b supplies, to the control section 103, a coordinate signal corresponding to a contact position while the finger P is placed in contact with the touch panel 101b. Herein, the coordinate signal represents X-Y coordinates of the contact position with the touch panel 101b. In the following description, a transverse direction of the touch panel 101b is defined as an X direction (a leftward direction is negative and a rightward direction is positive), and a longitudinal direction thereof is defined as a Y direction (an upward direction is positive and a downward direction is negative).

The control section 103 includes a CPU, a RAM, a ROM and the like, and the CPU uses the RAM as a working memory to execute a program stored in the ROM, thereby controlling each portion of the remote controller 100. The control section 103 functions as a deciding section 103a for deciding the operation state of the remote controller 100 in accordance with a program, a processing changing section 103b for changing a user interface, and a display processing section 103c for controlling display of a display panel 101a.

The deciding section 103a decides whether the operation is carried out on the touch panel 101b by using the right hand, the left hand or both of the hands based on the operation of the finger P over the touch panel 101b by a user. The processing changing section 103b changes the one or more user interface regions based on a result of the decision which is obtained by the deciding section 103a. The display processing section 103c executes a processing for a display on the display panel 101a. More specifically, the processing changing section 103b changes a deciding region for an operation and an invalid region depending on whether the operation of the user is to be carried out by using the right hand, the left hand or both of the hands, and changes a central position of a cursor for a finger. Moreover, the processing changing section 103b changes an algorithm for detecting the motion of the remote controller 100 based on a gesture of the user depending on whether the operation of the user is carried out by using the right hand, the left hand or both of the hands.

The memory 105 is a nonvolatile memory such as an EEPROM and stores icon data, command information and the like. The communicating section 107 transmits the predetermined operation command C to the television 10 depending on the operation input of the user.

The motion detecting sensor 109 has an acceleration sensor for detecting an acceleration in three-axis directions (X, Y and Z axes), a GPS sensor and the like. The control section 103 can acquire a motion of a gesture in accordance with an algorithm stored in the memory 105 when the user moves the remote controller 100 to make the gesture or the like based on a detection value of the motion detecting sensor 109.

The control section 103 decodes the coordinate signal supplied from the touch panel 101b to generate coordinate data, and controls each portion of the remote controller 100 based on the coordinate data and the contact/cancel signal. The control section 103 reads command information depending on the operation input from the memory 105 in response to the operation input of the user, and supplies the command information to the communicating section 107. The communicating section 107 transmits the predetermined operation command C to the television 10 based on the command information.

The control section 103 reads the icon data stored in the memory 105 to generate display data on a GUI screen, thereby supplying the display data to the display panel 101a based on one or more user interface regions of the touch panel 101b. The display panel 101a displays the GUI screen based on the display data. Moreover, the control section 103 generates the display data on the GUI screen such that a shape, an arrangement or the like of an icon is varied depending on the operation state of the remote controller 100.

The control section 103 generates a message Msg for designating the predetermined moving direction Dd at a predetermined time point and gives a notice to the user as will be described below. The message Msg may be visually given by using the display panel 101a and may be aurally given by using a speaker (not shown).

The moving direction Dd is designated as an upward, downward, leftward or rightward direction with respect to the touch panel 101b, for example. The moving direction Dd is designated as a moving direction with respect to the touch panel 101b. In this case, a notice of the message Msg "Please move a finger in a straight upward direction along a display screen" is given, for example.

Moreover, the moving direction Dd may be designated as at least two points which can specify the moving direction with respect to the touch panel 101b. In this case, a notice of the message Msg "Please indicate an arbitrary point on a lower end of a display screen with a finger and then designate a point positioned just above that point on an upper end of the display screen with a finger" is given, for example.

The control section 103 decides the operation state of the remote controller 100 based on the difference Δ between the designated moving direction Dd and the moving direction Da of the finger P to be moved over the touch panel 101b in accordance with the designation. Then, the control section 103 decides the operation state of the remote controller 100 based on the difference Δ between the designated moving direction Dd and the detected moving direction Da.

In the case where the moving direction is designated, the moving direction Da of the finger P is obtained from a moving track of the finger P which is detected continuously over the touch panel 101b in response to a drag operation or a flick operation. The drag operation serves to move the finger P in a state in which the finger P is caused to come in contact with the touch panel 101b, and the flick operation serves to flick the touch panel 101b in an arbitrary direction with the finger P. In this case, the moving direction Da of the finger P is obtained from a coordinate difference between coordinate data (a moving start point) on a time point where the contact signal is detected and coordinate data (a moving end point) acquired immediately before the detection of the cancel signal. More specifically, the flick operation serves to move the finger P touching the panel surface in an arbitrary direction over the panel surface. In the flick operation, a contact point indicative of a transition from a non-contact state to a contact state with the panel surface serves as a moving start point M0 and a contact point indicative of a transition from the contact state to the non-contact state serves as a moving end point M1.

On the other hand, in the case where a point capable of specifying the moving direction is designated, the moving direction Da of the finger P is obtained from the moving coordinates of the finger P which are detected discretely between one of the points and the other point over the touch panel 101b in response to a pointing operation. The pointing operation serves to indicate an arbitrary point of the touch panel 101b with the finger P. In this case, the moving direction Da of the finger P is obtained from the coordinate difference between the coordinate data (moving start point) at a pointing detection time point with respect to one of the points and coordinate data (moving end point) at a pointing detection time point with respect to the other point.

Next, the functional structure of the television 10 will be described. The display 11 displays an operation screen, contents and the like. The control section 13 includes a CPU, a RAM, a ROM and the like and controls each portion of the television 10. The memory 15 is a nonvolatile memory such as an EEPROM and stores operation screen information, operation command information and the like.

The communicating section 17 receives the operation command C from the remote controller 100 through an antenna 18. The communicating section 17 can also transmit, to the remote controller 100, operation screen information corresponding to the television 10, operation command information, status information indicative of the state of the television 10, and the like in addition to the receipt of the operation command C.

Upon receipt of the operation command C from the remote controller 100, the control section 13 controls each portion in order to execute processing A corresponding to the received operation command C based on the operation command information.

### [3. Operation of Remote Controller]

In the present embodiment, in the remote controller 100 having a liquid crystal touch panel, it is decided whether a user holds the remote controller 100 by both hands, a right hand or a left hand based on a track of a flick or the like. As a result of the decision, switching into an optimum user interface (UI) for both of the hands, the right hand or the left hand is automatically carried out to prevent a malfunction, thereby improving an operability.

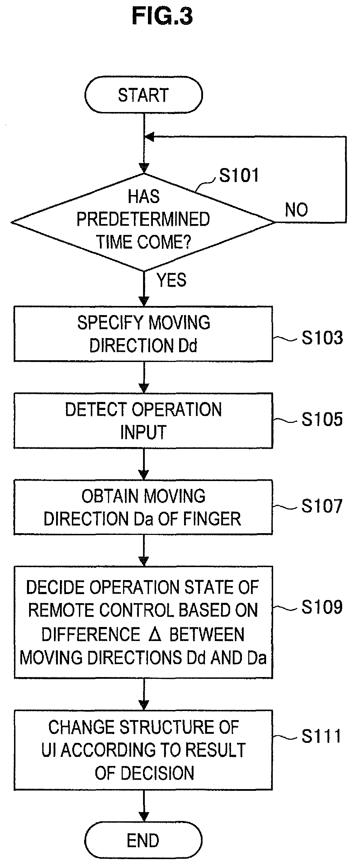

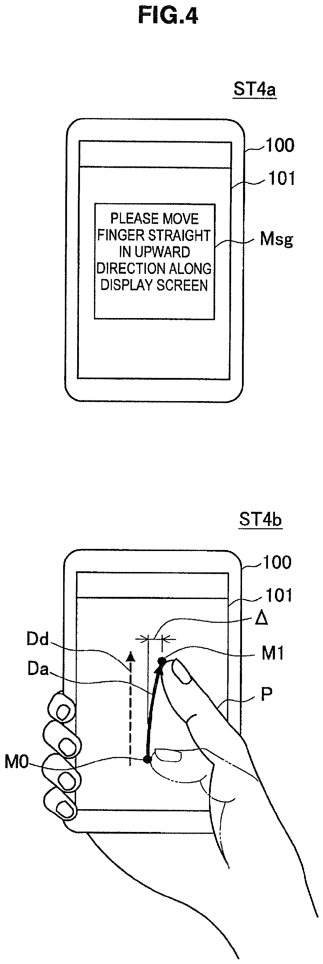

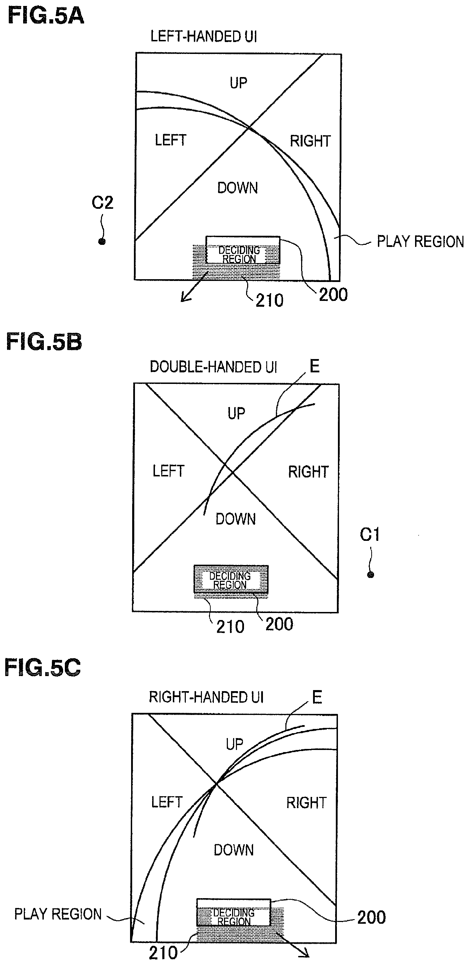

With reference to FIGS. 3 to 5, the operation of the remote controller 100 will be described below. FIG. 3 is a flow chart showing the operation of the remote controller 100. FIG. 4 is a view for explaining the operation of the remote controller 100. FIGS. 5A to 5C are views showing a change in the structure of the UI depending on an operation state.

As shown in FIG. 3, when a predetermined time point arrives, the control section 103 starts processing for deciding the operation state (Step S101). The predetermined time point may be a time point for a predetermined operation input or a predetermined processing time point such as a time of activation of the remote controller 100.

When the decision processing is started, the control section 103 gives a user a notice of the message Msg designating the predetermined moving direction Dd (S103). For example, in FIG. 4, the message Msg "Please move a finger in a straight upward direction along a display screen" is displayed (a state ST4a).

When the message Msg is displayed so that an operation input corresponding to the message Msg is carried out, the remote controller 100 detects the operation input (S105). For example, in FIG. 4, the user tries to move the thumb P of the right hand in the straight upward direction over the touch panel 101b (the touch panel display 101). However, the finger P is moved with an inclination in a slightly rightward and upward direction due to a structure of the right hand (a state ST4b).

When the operation input is detected, the control section 103 obtains the moving direction Da of the finger P based on the coordinate difference between the moving start point M0 of the finger P and the moving end point M1 thereof (S107). When the moving direction Da is obtained, the control section 103 decides the operation state of the remote controller 100 based on the difference Δ between the designated moving direction Dd and the detected moving direction Da (S109). For the operation state, there are decided a state in which the operation is carried out by one of hands and a state in which the operation is carried out by both of the hands, and furthermore, there are decided a state in which the operation is carried out by a left hand and a state in which the operation is carried out by a right hand. When the operation state can be decided, the control section 103 changes the structure of the UI depending on a result of the decision (S111).

FIGS. 5A to 5C are schematic views showing a variant of the structure of the GUI depending on the operation state. FIG. 5A shows an example of the UI regions of the touch panel 101b in the left-handed operation, FIG. 5B shows an example of the UI regions of the touch panel 101b in the double-handed operation and FIG. 5C shows an example of the UI regions of the touch panel 101b in the right-handed operation.

As shown in FIGS. 5A to 5C, a region for an up, down, left and right decision of a flick and a play region (an invalid region) are changed depending on the left-handed operation, the double-handed operation or the right-handed operation on the touch panel 101b. In FIGS. 5A to 5C, regions indicated as "up", "down", "right" and "left" represent regions for detecting operations on the touch panel 101b in upward, downward, rightward and leftward directions, respectively. For example, in FIG. 5B, when the contact of the finger with the touch panel 101b is moved from the "down" region to the "up" region, it is detected that the flick operation is carried out in the upward direction on the touch panel 101b.

In the case where the operation is carried out by both of the hands on the touch panel 101b, the flick is performed in a straight line comparatively accurately. As shown in FIG. 5B, therefore, a boundary between the up, down, left and right deciding regions of the touch panel 101b is set to be a straight line and the play region is small or is not present. Similarly, a deciding region for button press-down is almost equivalent to a size of a button which is displayed.

In the case where the operation is carried out by one of the hands on the touch panel 101b, the boundary between the up, down, left and right deciding regions of the touch panel 101b is set to be a curved line and the play region is enlarged as shown in FIG. 5A or 5C. In the case where the operation is carried out in the play region of the touch panel 101b, it is difficult to uniquely specify the operating direction. For this reason, the operation is not accepted. Also in the case where there is carried out an ambiguous moving operation in which it is difficult to uniquely specify the operating direction, consequently, the operating direction can be reliably prevented from being decided erroneously. In the case where the operation is carried out over the touch panel 101b with the thumb of the right hand, for example, the operation is often performed in such a manner that a tip of the thumb draws a circular arc around a position (C1) of a base of the thumb. In this case, when the operation is carried out along a circular arc E around C1 in the double-handed UI of FIG. 5B, the touch panel 101b is operated to pass through each of the "down", "left", "up" and "right" regions along the circular arc E even if the user intends the flick operation in the upward direction. For this reason, an erroneous operation is caused.

Therefore, one or more regions of the right-handed UI of the touch panel 101b is changed as shown in FIG. 5C to operate the touch panel 101b in such a manner that the operation of the user (the circular arc E) passes through two regions, that is, the "down" and "up" regions. Consequently, it is possible to reliably detect the flick operation in the upward direction that the user intends. Accordingly, it is possible to reliably prevent a wrong operation from being carried out.

Referring to the left-handed UI regions of the touch panel 101b shown in FIG. 5A, similarly, in the case where the operation over the touch panel 101b is carried out with the thumb of the left hand, the operation is performed in such a manner that the tip of the thumb draws a circular arc around a position (C2) of the base of the thumb. By changing one or more regions of the left-handed UI as shown in FIG. 5A, therefore, it is possible to reliably suppress a wrong operation.

In the right-handed UI regions of the touch panel 101b, moreover, there is carried out the operation along the circular arc E around C1. By avoiding the acceptance of the operation in the "play region" of the touch panel 101b shown in FIG. 5C, therefore, it is possible to reliably prevent a wrong operation from being caused by an operation which is not intended by the user.

Referring to the left-handed UI regions of the touch panel 101b shown in FIG. 5A, similarly, the operation is carried out in such a manner that the tip of the thumb draws a circular arc around a position (C2) of the base of the thumb. By preventing the operation from being accepted in the play region of the touch panel 101b, therefore, it is possible to reliably suppress execution of a wrong operation due to an operation that is not intended by the user.

According to the present embodiment, therefore, it is possible to reliably reduce the occurrence of the wrong operation by changing one or more of the UI regions of the touch panel 101b depending on the hand with which the operation is carried out by the user.

As shown in FIGS. 5A to 5C, an operation button 200 is displayed on a central lower part of the display screen 101a. When the user operates the operation button 200 over the touch panel 101b, an input in accordance with the operation button 200 is carried out for the touch panel 101b.

In an operation for pressing down the operation button 200, in the case where the user carries out the operation by one of the hands on the touch panel 101b, the central position of the finger is shifted as compared with the case in which the operation is performed by both of the hands on the touch panel 101b. More specifically, in many cases in which the operation is carried out by both of the hands on the touch panel 101b, the position itself of the displayed operation button 200 is pressed down. In many cases in which the operation is carried out by the right hand on the touch panel 101b, however, a region shifted in a rightward and downward direction from the position of the displayed operation button 200 is pressed down. In many cases in which the operation is carried out by the left hand on the touch panel 101b, similarly, a region shifted in a leftward and downward direction from the position of the displayed operation button 200 is pressed down.

As shown in FIG. 5A or 5C, therefore, a press-down deciding region 210 of the touch panel 101b in the press-down of the operation button 200 is moved to a lower side of the position of the displayed operation button 200, and furthermore, is shifted to left or right depending on the left-handed operation or the right-handed operation. In the case where the operation is carried out by the left hand on the touch panel 101b, the press-down deciding region 210 of the touch panel 101b for the operation button 200 is shifted in a leftward and downward direction (a direction of an arrow) with respect to the displayed operation button 200 as shown in FIG. 5A. In the case where the operation is carried out by the right hand on the touch panel 101b, moreover, the press-down deciding region 210 of the touch panel 101b for the operation button 200 that is displayed on the display panel 101a is shifted in a rightward and downward direction (a direction of an arrow) as shown in FIG. 5C. Consequently, it is possible to reliably avoid a situation in which the operation for pressing down on the touch panel 101b, with respect to the displayed operation button 200 is not carried out although the user intends to press down the displayed operation button 200,.

Moreover, the position of the part (the icon or the like) to be displayed, for example, the operation button 200 itself or the like may be replaced on left and right between the left-handed operation and the right-handed operation on the touch panel 101b. Also in this case, the displayed operation button 200, the icon or the like displayed in the display panel 101a is shifted in the rightward and downward direction if it determined that the touch panel 101b is operated by the right hand, and is shifted in the leftward and downward direction if it is operated by the left hand. Consequently, a distance between the operating finger P and the operation button 200, the icon or the like is reduced so that an operability can be enhanced.

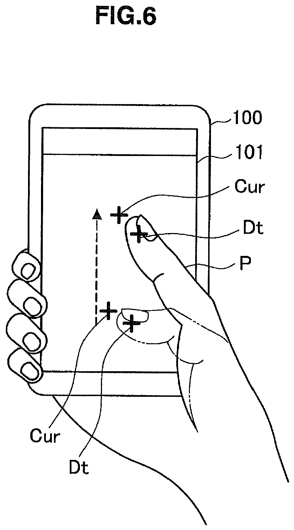

Moreover, a central position of a pointing cursor with respect to the finger may be shifted between the left-handed operation and the right-handed operation of the touch panel 101b. FIG. 6 is a schematic view showing an example in which a position of a cursor Cur is shifted in the leftward and upward direction with respect to a point Dt where the contact of the finger P is detected over the touch panel 101b when it is decided that the right-handed operation is carried out. As shown in FIG. 6, the thumb P is extended from an upper left position to a lower right position of the screen in the case of the right-handed operation. By shifting the position of the cursor Cur to the upper left position and performing a display with respect to the point Dt where the contact of the finger P is detected on the touch panel 101b, therefore, it is possible to display the cursor Cur in a desirable position on the tip of the thumb P on the display panel 101a. Consequently, it is possible to considerably enhance the operability of the user. In the case of the left-handed operation, similarly, the position of the cursor Cur is shifted in the rightward and upward direction and is thus displayed with respect to the point Dt where the contact of the finger P is detected.

In the decision of a gesture operation of the remote controller 100, moreover, it is also possible to select an optimum algorithm for the left-handed operation and the right-handed operation. When a gesture in the movement of the remote controller 100 through the user is to be detected by the motion detecting sensor 109, a motion makes a difference between the case in which the remote controller 100 is moved by the right hand and the case in which the remote controller 100 is moved by the left hand. By changing an algorithm for deciding the gesture for the right-handed operation, the left-handed operation and the double-handed operation respectively, therefore, it is possible to decide the gesture based on the optimum algorithm corresponding to each operation.

### [4. Processing for Deciding Operation State]

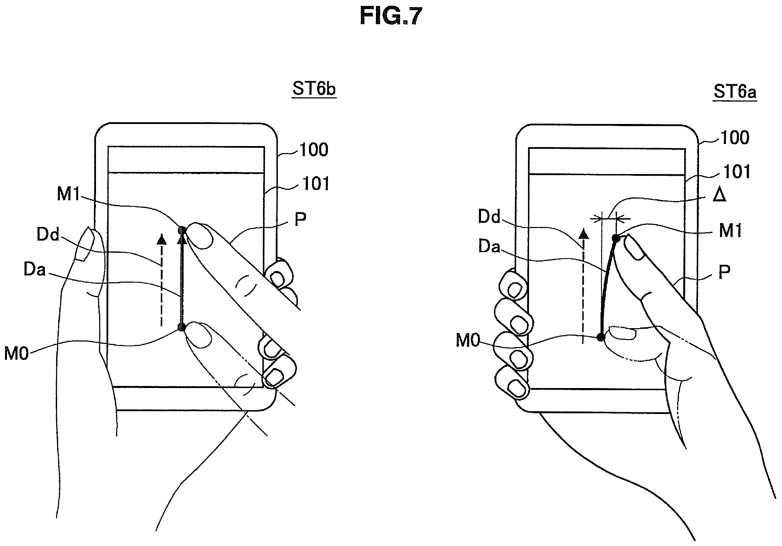

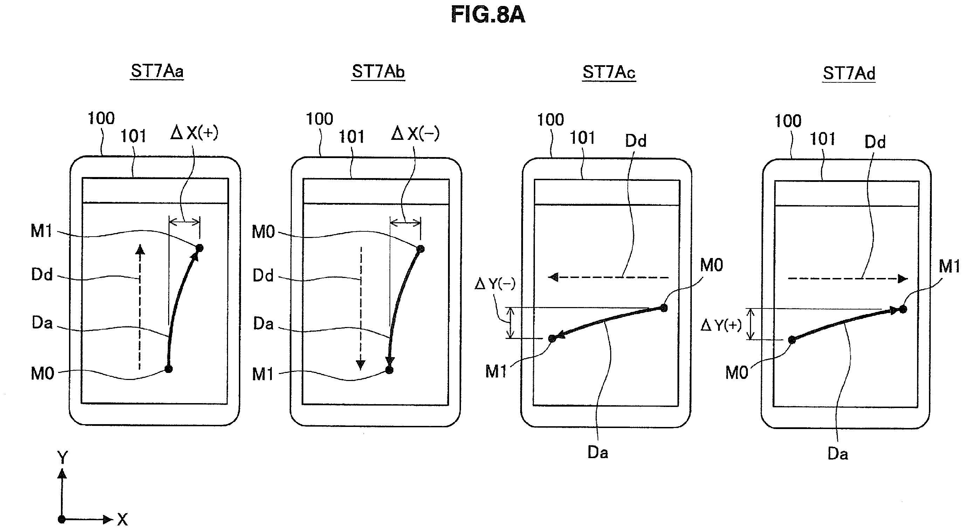

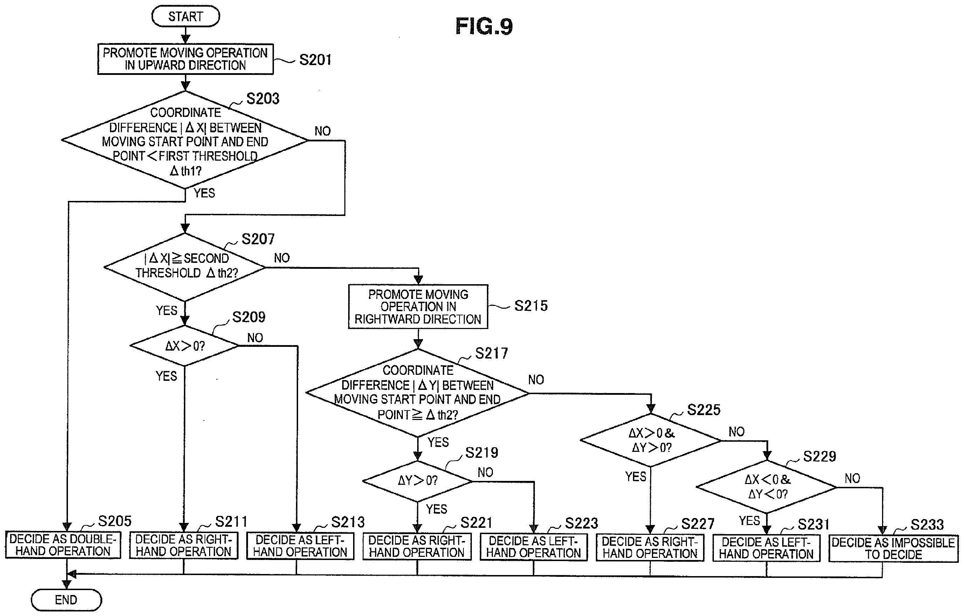

With reference to FIGS. 7 to 9, a processing for deciding an operation state will be descried below. FIG. 7 is a view showing a moving state of the finger P depending on an operation state. FIGS. 8A to 8C are views showing the moving direction Da of the finger P which is detected in the right-handed operation, the left-handed operation or the double-handed operation. FIG. 9 is a flow chart showing an example of the processing for deciding an operation state.

As shown in a state ST6a of FIG. 7, in the right-handed operation, the remote controller 100 is held by the right hand and the base portion of the thumb P of the right hand is positioned in the lower right position of the remote controller 100. When the thumb P is moved over the touch panel 101b, the thumb P is moved with the base portion set to be an axis. Even if the user intends a straight direction to move the thumb P, accordingly, the thumb P can easily be moved to draw a circular arc with the base portion set to be an axis. A moving state in the left-handed operation can also be explained in the same manner as the moving state in the right-handed operation.

On the other hand, as shown in a state ST6b of FIG. 7, the remote controller 100 is held by one of the hands (the left hand, for example) and an index finger P or the like of the other hand (the right hand, for example) is moved over the touch panel 101b (the touch panel display 101) in the double-handed operation. The finger P of the other hand is freely moved over the touch panel 101b irrespective of the left hand holding the remote controller 100. When the user intends the straight direction to move the index finger P, accordingly, the index finger P can easily be moved to draw a straight line. Although a coordinate difference ΔX in an X direction between the start point M0 and the end point M1 in the moving operation is not shown in FIG. 7, a slight coordinate difference ΔX can usually occur.

FIG. 8A shows the moving direction Da of the finger P which is detected in the right-handed operation. In this case, the moving direction Da is inclined in the rightward direction when the moving operation in the upward direction is designated (a state ST7Aa), and the moving direction Da is easily inclined in the leftward direction when the moving operation in the downward direction is designated (a state ST7Ab). Moreover, the moving direction Da is inclined in the downward direction when the moving operation in the leftward direction is designated (a state ST7Ac), and the moving direction Da is easily inclined in the upward direction when the moving operation in the rightward direction is designated (a state ST7Ad).

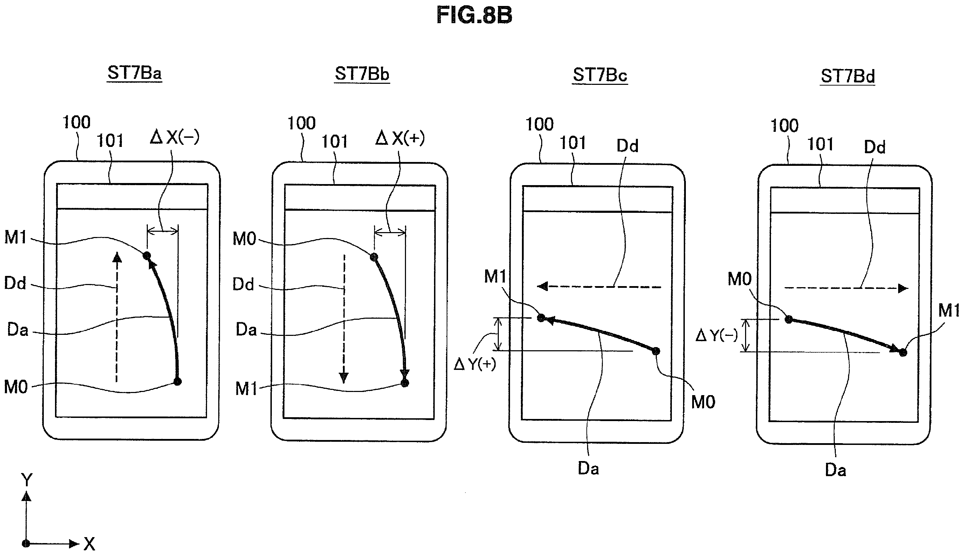

FIG. 8B shows the moving direction Da of the finger P which is detected in the left-handed operation. In this case, the moving direction Da is inclined in the leftward direction when the moving operation in the upward direction is designated (a state ST7Ba), and the moving direction Da is easily inclined in the rightward direction when the moving operation in the downward direction is designated (a state ST7Bb). Moreover, the moving direction Da is inclined in the upward direction when the moving operation in the leftward direction is designated (a state ST7Bc), and the moving direction Da is easily inclined in the downward direction when the moving operation in the rightward direction is designated (a state ST7Bd).

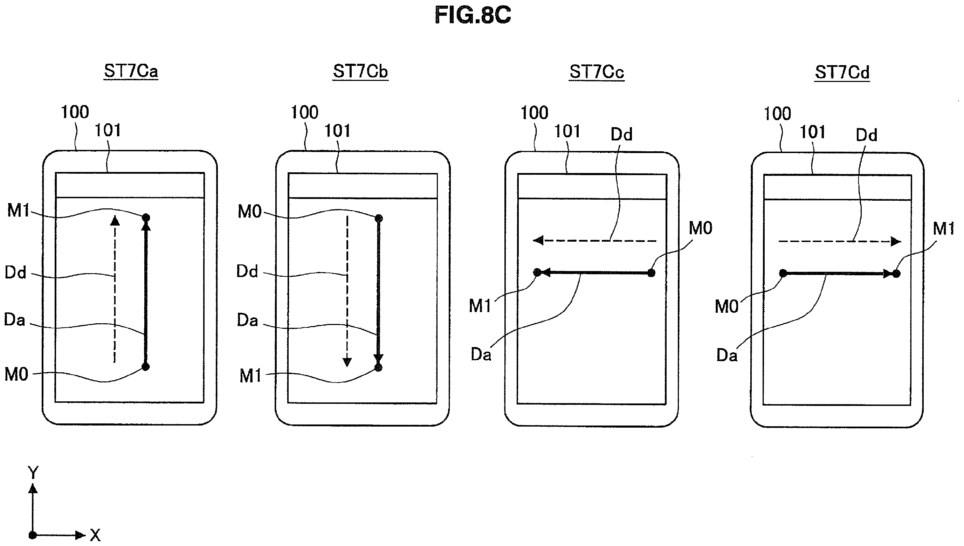

FIG. 8C shows the moving direction Da of the finger P which is detected in the double-handed operation. In this case, also when the moving operation Dd in any of the upward, downward, leftward and rightward directions is designated, the finger is usually moved in the designated direction. Therefore, the moving direction Da is inclined in a specific direction with difficulty (states ST7Ca to ST7Cd).

FIG. 9 shows an example of the processing for deciding an operation state. In the decision processing shown in FIG. 9, the control section 103 first prompts the user to carry out the moving operation in the upward direction with respect to the touch panel 101b (Step S201).

The control section 103 decides whether an absolute value |ΔX| of the coordinate difference ΔX (the end point coordinates - the start point coordinates) in the X direction between the start pint M0 and the end point M1 in the moving operation in the upward direction is smaller than a first threshold Δth1 or not (S203). If the deciding condition is satisfied, the control section 103 decides that the double-handed operation is carried out (S205).

If the deciding condition of Step S203 is not satisfied, the control section 103 decides whether or not the absolute value |ΔX| is equal to or greater than a second threshold Δth2 (≥ the first threshold Δth1) (S207). By deciding the absolute value |ΔX| using the threshold Δth2, it is possible to prevent the operation state from being decided erroneously.

If the deciding condition is satisfied, the control section 103 decides whether the coordinate difference ΔX has a positive value or not (S209). Then, the control section 103 decides that the right-handed operation is carried out if the coordinate difference ΔX has the positive value (S211) and decides that the left-handed operation is carried out if the coordinate value ΔX has a negative value (S213).

On the other hand, if it is decided that the absolute value |ΔX| is smaller than the threshold Δth2 in the processing of Step S207, the control section 103 prompts the user to carry out a moving operation in the rightward direction with respect to the touch panel 101b (S215).

The control section 103 decides whether or not an absolute value |ΔY| of the coordinate difference ΔY (end point coordinates - start point coordinates) in the Y direction between the start point coordinate M0 and the end point coordinate M1 in the moving operation in the rightward direction is equal to or greater than the second threshold Δth2 (S217). By deciding the absolute value |ΔY| using the threshold Δth2, it is possible to prevent the operation state from being decided erroneously.

If the deciding condition is satisfied, the control section 103 decides whether the coordinate difference ΔY has a positive value or not (S219). Then , the control section 103 decides that the right-handed operation is carried out if the coordinate value ΔY has the positive value (S221), and decides that the left-handed operation is carried out if the coordinate value ΔY has a negative value (S223).

On the other hand, if it is decided that the absolute value |ΔY| is smaller than the threshold Δth2 in the processing of Step S217, the control section 103 decides the operation state in combination of results of the decision in the moving operation in the upward and rightward directions. Also in the case where the absolute values |ΔX| and |ΔY| are small, consequently, it is possible to decide the operation state by using results of the decision in the moving operation in different directions from each other.

The control section 103 decides whether both of the coordinate differences ΔX and ΔY in the X and Y directions have positive values or not (S225). Then, the control section 103 decides that the right-handed operation is carried out if the deciding condition is satisfied (S227).

On the other hand, if the deciding condition is not satisfied, the control section 103 decides whether both of the coordinate differences ΔX and ΔY in the X and Y directions have negative values or not (S229). Then, the control section 103 decides that the left-handed operation is carried out if the deciding condition is satisfied (S231), and decides that the decision is disabled if the deciding condition is not satisfied (S233).

In the example described above, the decision of the double-handed operation is made by using the first threshold Δth1 in the processing of Step S203. If the deciding condition of Step S229 is not satisfied, however, it may be decided that the double-handed operation is carried out in place of a judgment of the disabled decision. Moreover, it is decided whether the absolute value |ΔY| of the coordinate difference ΔY in the Y direction in the moving operation in the rightward direction is smaller than the threshold Δth1 or not after Step S215, and it may be decided that the double-handed operation is carried out if the deciding condition is satisfied.

In the example described above, moreover, the operation state is decided by using the result of the decision in the moving operation in the upward and rightward directions. If the moving operation is carried out in different directions from each other, however, it is also possible to use the result of the decision for the moving operation in any of the upward and downward directions, the upward and leftward directions, the leftward and rightward directions, and the like, for example. In the case where the result of the decision for the moving operation in orthogonal directions to each other is used, the difference Δ between the moving directions Dd and Da easily occurs due to an aspect ratio of the touch panel 101b. Therefore, it is possible to decide the operation state with high precision.

Although the operation state is decided in combination of the results of the decision in the moving operations in the upward and rightward directions in the processings after Step S225 in the example, it is also possible to judge that the decision is disabled if the deciding condition is not satisfied in the processing of Step S217.

Although the same threshold Δth2 is used as the threshold in the moving operation in the upward direction and the threshold in the moving operation in the rightward direction in the example, it is also possible to use different thresholds, for example, Δth2, Δth2' and the like, for example.

As described above, according to the remote controller 100 in accordance with an embodiment of the present disclosure, the operation state of the remote controller 100 is decided based on the difference Δ between the designated moving direction Dd and the moving direction Da of the finger P to be moved over the display panel 101a in accordance with the designation. In the case where the remote controller 100 is operated by one of the hands, the difference Δ corresponding to the finger P to be used for the operation easily occurs due to the structure of the hand in the designated moving direction Dd and the moving direction Da of the finger P. On the other hand, in the case where the remote controller 100 is operated by both of the hands, the difference Δ corresponding to the finger P to be used for the operation occurs with difficulty in the designated moving direction Dd and the moving direction Da of the finger P. For this reason, it is possible to easily and accurately decide the operation state of the remote controller 100 based on the difference Δ between the moving directions Dd and Da.

Although the description has been given to the case in which the upward, downward, leftward and rightward moving directions Dd are designated with respect to the touch panel 101b, an oblique moving direction Dd may be designated along a diagonal line of the touch panel 101b, for example. In this case, it is possible to decide the operation state of the remote controller 100 based on the difference Δ (a difference in an angle) between the moving direction Dd along the diagonal line which is designated and the detected moving direction Da.

Although the description has been given to the case in which the moving direction Da of the finger P coming in contact with the touch panel 101b is detected, it is also possible to detect the moving direction Da of the finger which is close to the touch panel 101b.

Although the user is prompted to carry out the moving operation in the predetermined direction, thereby deciding the operation state in the description above, the present disclosure is not restricted thereto. For example, it is a matter of course that the operation state can also be decided based on the difference Δ between a vertical axis or a horizontal axis and the moving direction Da of the finger P in the case where the flick operation of the user is arbitrarily performed. By detecting the flick operation of the finger P plural times to decide the operation state based on the results of the detections performed plural times, it is possible to enhance precision in the decision.

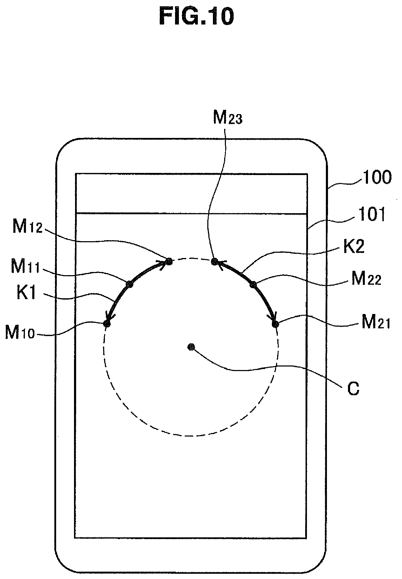

FIG. 10 is a schematic view showing another example for detecting the right-handed operation and the left-handed operation. In the example shown in FIG. 10, a track (a circular arc) of the finger P with which the user touches the touch panel 101b is detected and it is decided whether the right-handed operation or the left-handed operation is carried out depending on an orientation of the circular arc.

In FIG. 10, a track K1 denotes the case of the right-handed operation and a track K2 denotes the left-handed operation. In the case of the right-handed operation, the track K1 is obtained from three contact points M10, M11 and M12. In the case where the track K1 is a circular arc, a center CE thereof is obtained. In the case of the right-handed operation, the track K1 is a circular arc with a base of the thumb set to be a center, and the center of the circular arc is positioned on the right side of the display panel 101a. In the case where the center CE is positioned on the right side with respect to the track K1, accordingly, it is possible to decide that the right-handed operation is carried out.

In the same manner as the case of the left-handed operation, in the case where the center CE is positioned on the left side with respect to the track K2 if the track K2 takes a shape of a circular shape, it is possible to decide that the left-handed operation is carried out.

### [5. Processing for Changing UI]

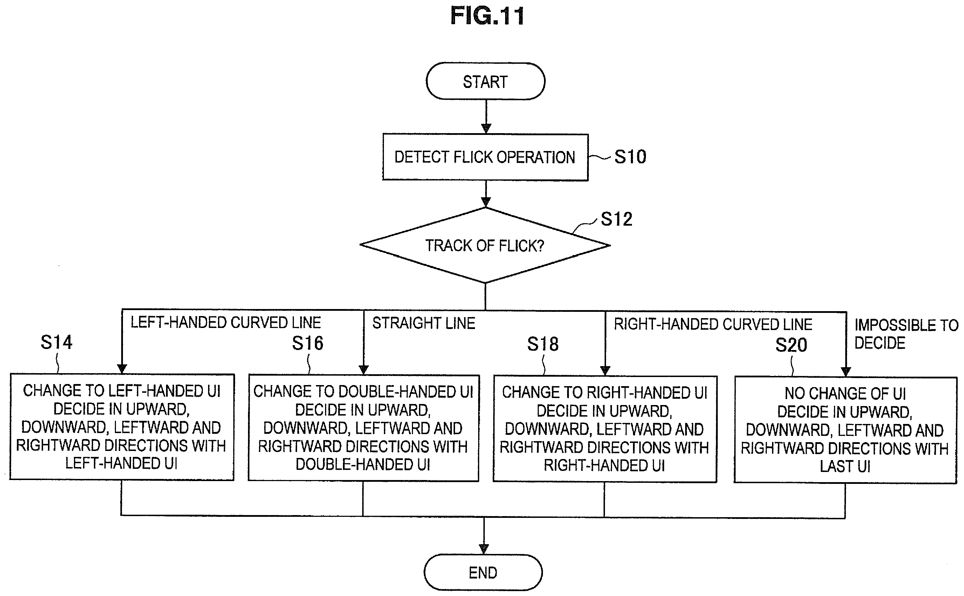

Next, description will be given to a processing for changing the structure of the one or more UI regions of the touch panel or touch device 101b depending on the operation state. FIG. 11 is a flow chart showing the processing for changing the structure of the UI regions of the touch panel 101b depending on the operation state. First of all, a flick operation is detected at Step S10. At next Step S12, it is decided whether a track of a flick is a curved line through a left-handed operation, a straight line, a curved line through a right-handed operation or a disabled decision.

In the case where the track of the flick on the touch panel 101b is the curved line through the left-handed operation, the processing proceeds to Step S14. At Step S14, a change to one or more regions of the left-handed UI shown in FIG. 5A is carried out, and upward, downward, leftward and rightward operations are decided through the one or more regions of the left-handed UI.

In the case where the track of the flick on the touch panel 101b is the straight line, the processing proceeds to Step S16. At Step S16, a change to the one or more regions of the double-handed UI shown in FIG. 5B is carried out, and the upward, downward, leftward and rightward operations are decided through the one or more regions of the double-handed UI.

In the case where the track of the flick on the touch panel 101b is the curved line through the right-handed operation, the processing proceeds to Step S18. At Step S18, a change to the one or more regions of the right-handed UI shown in FIG. 5C is carried out, and the upward, downward, leftward and rightward operations are decided through the one or more regions of the right-handed UI.

In the case where it is difficult to decide the track of the flick on the touch panel 101b, the processing proceeds to Step S20. At Step S20, the one or more regions of the UI are not changed but the upward, downward, leftward and rightward operations are decided through the same one or more regions of the UI as the last one.

As described above, according to the present embodiment, it is decided whether the remote controller 100 having a liquid crystal touch panel (e.g., including a display panel 101a and a touch panel or touch device 101b) is operated by both of the hands, the right hand or the left hand of a user, and switching into the optimum UI configuration by modifying one or more regions of the touch device 101b and/or the display of one or more graphical components displayed in the display panel 101a for each of both of the hands, the right hand and the left hand is automatically carried out. Consequently, it is possible to suppress a malfunction and to considerably improve an operability.

It should be understood by those skilled in the art that various modifications, combinations, subcombinations and alterations may occur depending on design requirements and other factors insofar as they are within the scope of the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An information processing apparatus (100), the apparatus comprising:
a processor configured to:
detect an operation performed on a touch device (101b) by a user, wherein the touch device is part of a display (101), and the touch device has a number of regions associated with said touch device and arranged to detect a direction of the operation intended by the user when the operation is performed on the touch device by the user,
wherein the number of regions associated with the touch device includes at least one deciding region, wherein the at least one deciding region includes a plurality of deciding regions including an up deciding region, a down deciding region, a right deciding region, and a left deciding region for detecting operations performed on the touch device (101b) by the user in an upward, downward, rightward, or leftward directions respectively, and wherein the number of regions associated with the touch device includes at least one invalid region for detecting invalid operations performed on the touch device by the user, wherein an operation carried out by the user on the at least one invalid region is not accepted;
present one or more user interface components of a user interface on the display based upon one or more of the number of regions associated with the touch device;
determine whether the operation was performed on the touch device via a right hand, a left hand, or both hands by the user, wherein an operation performed by both hands comprises the processing apparatus held by one hand and the other hand moved over the touch device;
modify at least one region associated with the touch device depending upon whether the operation was performed by the right hand, the left hand, or both hands on the touch device; and
modify the at least one region associated with the touch device by modifying the at least one invalid region and the at least one deciding region depending upon whether the operation was performed on the touch device via the left hand or the right hand by the user, wherein a boundary between the up, down, left and right deciding regions of the touch panel is set to be a pair of curved lines intersecting each other and forming the invalid region there between.

2. The information processing apparatus of claim 1, wherein the processor is further configured to:
modify a central position of a cursor (Cur) depending upon whether the operation was performed on the touch device (101b) via the left hand or the right hand by the user.

3. The information processing apparatus of claim 1, wherein the processor is further configured to:
select an operation command from a plurality of operation commands based on the operation performed on the touch device (101b) by the user; and,
transmit the selected operation command to an external receiver for further processing.

4. The information processing apparatus of claim 1, wherein the processor is further configured to:
determine a start coordinate associated with a first point of contact on the touch device (101b) during the operation performed on the touch device;
determine an end coordinate associated with a second point of contact on the touch device during the operation performed on the touch device; and,
determine whether the operation was performed on the touch device via the right hand, the left hand, or both hands by the user based on calculating a difference between the end coordinate and the start coordinate.

5. The information processing apparatus of claim 4, wherein the processor is further configured to:
determine an absolute value of the difference between the end coordinate and the start coordinate;
compare the absolute value to a first threshold value (Δth1); and,
when a comparison result indicates that the absolute value is less than the first threshold value, determine that the operation was performed on the touch device (101b) via both hands by the user.

6. The information processing apparatus of claim 5, wherein:
when the comparison result indicates that the absolute value is greater than or equal to the first threshold value (Δth1), the processor is further configured to:
determine whether the absolute value is greater than or equal to a second threshold value (Δth2);
when a determination result indicates that the absolute value is greater than or equal to the second threshold value, determine if the difference between the end coordinate and the start coordinate is positive or negative;
when a difference result indicates that the difference between the end coordinate and the start coordinate is positive, determine that the operation was performed on the touch device (101b) via the right hand by the user; and,
when the difference result indicates that the difference between the end coordinate and the start coordinate is negative, determine that the operation was performed on the touch device via the left hand by the user.

7. The information processing apparatus of claim 4, wherein the start coordinate and the end coordinate are horizontal coordinates.

8. The information processing apparatus of claim 4, wherein the start coordinate and the end coordinate are vertical coordinates.

9. A computer-implemented method comprising:
detecting an operation performed on a touch device (101b) of an information processing apparatus by a user, wherein the touch device is part of a display (101) and the touch device has a number of regions associated with said touch device and arranged to detect a direction of the operation intended by the user when the operation is performed on the touch device by the user,
wherein the number of regions associated with the touch device includes at least one deciding region, wherein the at least one deciding region includes a plurality of deciding regions including an up deciding region, a down deciding region, a right deciding region, and a left deciding region for detecting operations performed on the touch device (101b) by the user in an upward, downward, rightward, or leftward directions respectively, and wherein the number of regions associated with the touch device includes at least one invalid region for detecting invalid operations performed on the touch device by the user, wherein an operation carried out by the user on the at least one invalid region is not accepted;
presenting one or more user interface components of a user interface on the display based upon one or more of the number of regions associated with the touch device;
determining, using a processor, whether the operation was performed on the touch device via a right hand, a left hand, or both hands by the user, wherein an operation performed by both hands comprises the processing apparatus held by one hand and the other hand moved over the touch device;
modifying at least one region associated with the touch device depending upon whether the operation was performed by the right hand, the left hand, or both hands on the touch device; and
modifying the at least one region associated with the touch device by modifying the at least one invalid region and the at least one deciding region depending upon whether the operation was performed on the touch device via the left hand or the right hand by the user, wherein a boundary between the up, down, left and right deciding regions of the touch panel is set to be a pair of curved lines intersecting each other and forming the invalid region there between.

10. A non-transitory computer-readable storage unit on which computer readable instructions of a program are stored, the instructions, when executed by a processor, causing the processor to perform the method of claim 9.

## Patentansprüche

1. Informationsverarbeitungsvorrichtung (100), die Vorrichtung mit:
einem Prozessor, der ausgebildet ist zum:
Detektieren einer Betätigung, die auf einem berührungsempfindlichen Gerät (101b) durch einen Benutzer durchgeführt wird, wobei das berührungsempfindliche Gerät ein Teil eines Displays (101) ist und das berührungsempfindliche Gerät eine Anzahl von Regionen hat, die dem berührungsempfindlichen Gerät zugeordnet sind und angeordnet sind, um eine Richtung der Betätigung zu detektieren, die vom Benutzer gewollt war, wenn die Betätigung auf dem berührungsempfindlichen Gerät durch den Benutzer durchgeführt wird,
wobei die Anzahl der Regionen, die dem berührungsempfindlichen Gerät zugeordnet ist, zumindest eine Entscheidungsregion aufweist, wobei die zumindest eine Entscheidungsregion eine Vielzahl von Entscheidungsregionen aufweist, einschließlich einer Aufwärts-Entscheidungsregion, einer Abwärts-Entscheidungsregion, einer Rechts-Entscheidungsregion und einer Links-Entscheidungsregion zum Bestimmen von Betätigungen, die auf dem berührungsempfindlichen Gerät (101b) durch den Benutzer in einer aufwärtigen, abwärtigen, rechtsgerichteten oder linksgerichteten Richtung, jeweils entsprechend, durchgeführt werden, und wobei die Anzahl der Regionen, die dem berührungsempfindlichen Gerät zugeordnet ist, zumindest eine ungültige Region zum Detektieren von ungültigen Betätigungen aufweist, die von dem Benutzer auf dem berührungsempfindlichen Gerät vorgenommen werden, wobei eine Betätigung, die von dem Benutzer in der zumindest einen ungültigen Region vorgenommen wird, nicht akzeptiert wird;
Darstellen von einer oder mehreren Benutzerschnittstellenkomponenten von einer Benutzerschnittstelle auf dem Display basierend auf einer oder mehrerer der Anzahl von Regionen, die dem berührungsempfindlichen Gerät zugeordnet ist;
Bestimmen, ob die Betätigung auf dem berührungsempfindlichen Gerät durch eine rechte Hand, eine linke Hand oder beide Hände durch den Benutzer vorgenommen wurde, wobei eine Betätigung, die mittels beider Hände durchgeführt wurde, umfasst, dass die Verarbeitungseinrichtung von einer Hand gehalten wurde und die andere Hand sich über das berührungsempfindliche Gerät bewegt hat;
Modifizieren von zumindest einer Region, die dem berührungsempfindlichen Gerät zugeordnet ist, in Abhängigkeit davon, ob die Betätigung mit der rechten Hand, der linken Hand oder beiden Händen auf dem berührungsempfindlichen Gerät durchgeführt wurde; und
Modifizieren der zumindest einen Region, die dem berührungsempfindlichen Gerät zugeordnet ist, durch ein Modifizieren der zumindest einen ungültigen Region und der zumindest einen Entscheidungsregion in Abhängigkeit davon, ob die Betätigung auf dem berührungsempfindlichen Gerät mittels der linken Hand oder der rechten Hand von dem Benutzer durchgeführt wurde, wobei eine Grenze zwischen den Aufwärts-, Abwärts-, Links- und Rechts-Entscheidungsregionen des berührungsempfindlichen Geräts als ein Paar gekrümmter Linien gesetzt ist, die sich gegenseitig schneiden und dazwischen die ungültige Region bilden.

2. Informationsverarbeitungsvorrichtung nach Anspruch 1, wobei der Prozessor ferner dazu ausgebildet ist zum:
Modifizieren einer zentralen Position eines Cursors (Cur) in Abhängigkeit davon, ob die Betätigung auf dem berührungsempfindlichen Gerät (101b) mit der linken Hand oder der rechten Hand durch den Benutzer durchgeführt wurde.

3. Informationsverarbeitungsvorrichtung nach Anspruch 1, wobei der Prozessor ferner dazu ausgebildet ist zum:
Auswählen eines Betätigungsbefehls aus einer Vielzahl von Betätigungsbefehlen basierend auf der Betätigung, die von dem Benutzer auf dem berührungsempfindlichen Gerät (101b) durchgeführt wurde; und,
Übertragen des ausgewählten Betätigungsbefehls an einen externen Empfänger zur weiteren Bearbeitung.

4. Informationsverarbeitungsvorrichtung nach Anspruch 1, wobei der Prozessor ferner dazu ausgebildet ist zum:
Bestimmen einer Start-Koordinate, die einem ersten Kontaktpunkt auf dem berührungsempfindlichen Gerät (101 b) zugeordnet ist, während die Betätigung auf dem berührungsempfindlichen Gerät durchgeführt wird;
Bestimmen einer End-Koordinate, die einem zweiten Kontaktpunkt auf dem berührungsempfindlichen Gerät zugeordnet ist, während die Betätigung auf dem berührungsempfindlichen Gerät durchgeführt wird; und
Bestimmen, ob die Betätigung auf dem berührungsempfindlichen Gerät mit der rechten Hand, der linken Hand oder beiden Händen durch den Benutzer durchgeführt wurde, basierend auf der Berechnung einer Differenz zwischen der End-Koordinate und der Start-Koordinate.

5. Informationsverarbeitungsvorrichtung nach Anspruch 1, wobei der Prozessor ferner dazu ausgebildet ist zum:
Bestimmen eines Absolutwerts der Differenz zwischen der End-Koordinate und der Start-Koordinate;
Vergleichen des Absolutwerts mit einem ersten Schwellwert (Δth1); und
wenn ein Vergleichsergebnis anzeigt, dass der Absolutwert kleiner ist als der erste Schwellwert, Feststellen, dass die Betätigung auf dem berührungsempfindlichen Gerät (101 b) durch den Benutzer mittels beider Hände durchgeführt wurde.

6. Informationsverarbeitungsvorrichtung nach Anspruch 5, wobei:
wenn das Vergleichsergebnis anzeigt, dass der Absolutwert größer ist oder gleich dem ersten Schwellwert (Δth1), der Prozessor ferner ausgebildet ist zum:
Bestimmen, ob der Absolutwert größer als oder gleich einem zweiten Schwellwert (Δth2) ist;
wenn ein Bestimmungsergebnis anzeigt, dass der Absolutwert größer ist oder gleich ist zum zweiten Schwellwert, Bestimmen, ob die Differenz zwischen der End-Koordinate und der Start-Koordinate positiv oder negativ ist;
wenn ein Differenzergebnis anzeigt, dass die Differenz zwischen der End-Koordinate und der Start-Koordinate positiv ist, Feststellen, dass die Betätigung auf dem berührungsempfindlichen Gerät (101b) von dem Benutzer mittels der rechten Hand durchgeführt wurde; und
wenn ein Differenzergebnis anzeigt, dass die Differenz zwischen der End-Koordinate und der Start-Koordinate negativ ist, Feststellen, dass die Betätigung auf dem berührungsempfindlichen Gerät von dem Benutzer mittels der linken Hand durchgeführt wurde.

7. Informationsverarbeitungsvorrichtung nach Anspruch 4, wobei die Start-Koordinate und die End-Koordinate horizontale Koordinaten sind.

8. Informationsverarbeitungsvorrichtung nach Anspruch 4, wobei die Start-Koordinate und die End-Koordinate vertikale Koordinaten sind.

9. Computerimplementiertes Verfahren mit den Schritten:
Detektieren einer Betätigung, die auf einem berührungsempfindlichen Gerät (101b) eines Informationsverarbeitungsgeräts durch einen Benutzer durchgeführt wird, wobei das berührungsempfindliche Gerät ein Teil eines Displays (101) ist und das berührungsempfindliche Gerät eine Anzahl von Regionen hat, die dem berührungsempfindlichen Gerät zugeordnet sind und angeordnet sind, um eine Richtung der Betätigung zu detektieren, die vom Benutzer gewollt war, wenn die Betätigung auf dem berührungsempfindlichen Gerät durch den Benutzer durchgeführt wird,
wobei die Anzahl der Regionen, die dem berührungsempfindlichen Gerät zugeordnet ist, zumindest eine Entscheidungsregion aufweist, wobei die zumindest eine Entscheidungsregion eine Vielzahl von Entscheidungsregionen aufweist, einschließlich einer Aufwärts-Entscheidungsregion, einer Abwärts-Entscheidungsregion, einer Rechts-Entscheidungsregion und einer Links-Entscheidungsregion zum Bestimmen von Betätigungen, die auf dem berührungsempfindlichen Gerät (101b) durch den Benutzer in einer aufwärtigen, abwärtigen, rechtsgerichteten oder linksgerichteten Richtung, jeweils entsprechend, durchgeführt werden, und wobei die Anzahl der Regionen, die dem berührungsempfindlichen Gerät zugeordnet ist, zumindest eine ungültige Region zum Detektieren von ungültigen Betätigungen aufweist, die von dem Benutzer auf dem berührungsempfindlichen Gerät vorgenommen werden, wobei eine Betätigung, die von dem Benutzer in der zumindest einen ungültigen Region vorgenommen wird, nicht akzeptiert wird;
Darstellen von einer oder mehreren Benutzerschnittstellenkomponenten von einer Benutzerschnittstelle auf dem Display basierend auf einer oder mehrerer der Anzahl von Regionen, die dem berührungsempfindliche Gerät zugeordnet ist;
Bestimmen, unter Verwendung eines Prozessors, ob die Betätigung auf dem berührungsempfindlichen Gerät durch die eine rechte Hand, eine linke Hand oder beide Hände durch den Benutzer vorgenommen wurde, wobei eine Betätigung, die mittels beider Hände durchgeführt wurde, umfasst, dass die Verarbeitungseinrichtung von einer Hand gehalten wurde und die andere Hand sich über das berührungsempfindliche Gerät bewegt hat;
Modifizieren von zumindest einer Region, die dem berührungsempfindlichen Gerät zugeordnet ist, in Abhängigkeit davon, ob die Betätigung mit der rechten Hand, der linken Hand oder beiden Händen auf dem berührungsempfindlichen Gerät durchgeführt wurde; und
Modifizieren der zumindest einen Region, die dem berührungsempfindlichen Gerät zugeordnet ist, durch ein Modifizieren der zumindest einen ungültigen Region und der zumindest einen Entscheidungsregion in Abhängigkeit davon, ob die Betätigung auf dem berührungsempfindlichen Gerät mittels der linken Hand oder der rechten Hand von dem Benutzer durchgeführt wurde, wobei eine Grenze zwischen dem Aufwärts-, Abwärts-, Links- und Rechts-Entscheidungsregionen des berührungsempfindlichen Geräts als ein Paar gekrümmter Linien gesetzt ist, die sich gegenseitig schneiden und dazwischen die ungültige Region bilden.

10. Nicht-flüchtige computerlesbare Speichereinheit, auf der computerlesbare Anweisungen eines Programms gespeichert sind, wobei die Anweisungen, wenn sie von einem Prozessor ausgeführt werden, bewirken, dass der Prozessor das Verfahren nach Anspruch 9 ausführt.

## Revendications

1. Appareil de traitement d'informations (100), l'appareil comprenant :
un processeur configuré pour :
détecter une opération effectuée sur un dispositif tactile (101 b) par un utilisateur, le dispositif tactile faisant partie d'un affichage (101), et le dispositif tactile comportant un certain nombre de régions associées audit dispositif tactile et agencées de manière à détecter une direction de l'opération voulue par l'utilisateur lorsque l'opération est effectuée sur le dispositif tactile par l'utilisateur,
le nombre de régions associées au dispositif tactile comportant au moins une région de décision,
l'au moins une région de décision comportant une pluralité de régions de décision comportant une région de décision en haut, une région de décision en bas, une région de décision à droite et une région de décision à gauche destinées à détecter des opérations effectuées sur le dispositif tactile (101 b) par l'utilisateur dans des directions respectivement vers le haut, vers le bas, vers la droite ou vers la gauche, et le nombre de régions associées au dispositif tactile comportant au moins une région invalide destinée à détecter des opérations invalides effectuées sur le dispositif tactile par l'utilisateur, une opération réalisée par l'utilisateur sur l'au moins une région invalide n'étant pas acceptée ;
présenter une ou plusieurs composantes d'interface utilisateur d'une interface utilisateur sur l'affichage en fonction d'une ou de plusieurs du nombre de régions associées au dispositif tactile ;
déterminer si l'opération a été effectuée sur le dispositif tactile à l'aide d'une main droite, d'une main gauche ou des deux mains par l'utilisateur, une opération effectuée des deux mains comprenant la tenue de l'appareil de traitement d'une main et le mouvement de l'autre main sur le dessus du dispositif tactile ;
modifier au moins une région associée au dispositif tactile selon que l'opération a été effectuée de la main droite, de la main gauche ou des deux mains sur le dispositif tactile ; et
modifier l'au moins une région associée au dispositif tactile en modifiant l'au moins une région invalide et l'au moins une région de décision selon que l'opération a été effectuée sur le dispositif tactile à l'aide de la main gauche ou de la main droite par l'utilisateur, une frontière entre les régions de décision en haut, en bas, à gauche et à droite du panneau tactile étant définie comme une paire de lignes courbes qui se coupent et forment entre elles la région invalide.

2. Appareil de traitement d'informations selon la revendication 1, dans lequel le processeur est configuré en outre pour :
modifier une position centrale d'un curseur (Cur) selon que l'opération a été effectuée sur le dispositif tactile (101 b) à l'aide de la main gauche ou de la main droite par l'utilisateur.

3. Appareil de traitement d'informations selon la revendication 1, dans lequel le processeur est configuré en outre pour :
sélectionner une commande d'opération parmi une pluralité de commandes d'opération en fonction de l'opération effectuée sur le dispositif tactile (101b) par l'utilisateur ; et,
transmettre la commande d'opération sélectionnée à un récepteur externe en vue d'un traitement ultérieur.

4. Appareil de traitement d'informations selon la revendication 1, dans lequel le processeur est configuré en outre pour :
déterminer une coordonnée de début associée à un premier point de contact sur le dispositif tactile (101 b) au cours de l'opération effectuée sur le dispositif tactile ;
déterminer une coordonnée de fin associée à un deuxième point de contact sur le dispositif tactile au cours de l'opération effectuée sur le dispositif tactile ; et,
déterminer si l'opération a été effectuée sur le dispositif tactile à l'aide de la main droite, de la main gauche ou des deux mains par l'utilisateur en fonction d'un calcul d'une différence entre la coordonnée de fin et la coordonnée de début.

5. Appareil de traitement d'informations selon la revendication 4, dans lequel le processeur est configuré en outre pour :
déterminer une valeur absolue de la différence entre la coordonnée de fin et la coordonnée de début ;
comparer la valeur absolue à une première valeur de seuil (Δth1) ; et,
si un résultat de comparaison indique que la valeur absolue est inférieure à la première valeur de seuil, déterminer que l'opération a été effectuée sur le dispositif tactile (101 b) à l'aide des deux mains par l'utilisateur.

6. Appareil de traitement d'informations selon la revendication 5, dans lequel :
si le résultat de comparaison indique que la valeur absolue est supérieure ou égale à la première valeur de seuil (Δth1), le processeur est configuré en outre pour :
déterminer si la valeur absolue est supérieure ou égale à une deuxième valeur de seuil (Δth2) ;
si un résultat de détermination indique que la valeur absolue est supérieure ou égale à la deuxième valeur de seuil, déterminer si la différence entre la coordonnée de fin et la coordonnée de début est positive ou négative ;
si un résultat de différence indique que la différence entre la coordonnée de fin et la coordonnée de début est positive, déterminer que l'opération a été effectuée sur le dispositif tactile (101b) à l'aide de la main droite par l'utilisateur ; et,
si le résultat de différence indique que la différence entre la coordonnée de fin et la coordonnée de début est négative, déterminer que l'opération a été effectuée sur le dispositif tactile à l'aide de la main gauche par l'utilisateur.

7. Appareil de traitement d'informations selon la revendication 4, dans lequel la coordonnée de début et la coordonnée de fin sont des coordonnées horizontales.

8. Appareil de traitement d'informations selon la revendication 4, dans lequel la coordonnée de début et la coordonnée de fin sont des coordonnées verticales.

9. Procédé mis en oeuvre par ordinateur, comprenant les étapes consistant à :
détecter une opération effectuée sur un dispositif tactile (101b) d'un appareil de traitement d'informations par un utilisateur, le dispositif tactile faisant partie d'un affichage (101), et le dispositif tactile comportant un certain nombre de régions associées audit dispositif tactile et agencées de manière à détecter une direction de l'opération voulue par l'utilisateur lorsque l'opération est effectuée sur le dispositif tactile par l'utilisateur,
le nombre de régions associées au dispositif tactile comportant au moins une région de décision,
l'au moins une région de décision comportant une pluralité de régions de décision comportant une région de décision en haut, une région de décision en bas, une région de décision à droite et une région de décision à gauche destinées à détecter des opérations effectuées sur le dispositif tactile (101b) par l'utilisateur dans des directions respectivement vers le haut, vers le bas, vers la droite ou vers la gauche, et le nombre de régions associées au dispositif tactile comportant au moins une région invalide destinée à détecter des opérations invalides effectuées sur le dispositif tactile par l'utilisateur, une opération réalisée par l'utilisateur sur l'au moins une région invalide n'étant pas acceptée ;
présenter une ou plusieurs composantes d'interface utilisateur d'une interface utilisateur sur l'affichage en fonction d'une ou de plusieurs du nombre de régions associées au dispositif tactile ;
déterminer, au moyen d'un processeur, si l'opération a été effectuée sur le dispositif tactile à l'aide d'une main droite, d'une main gauche ou des deux mains par l'utilisateur, une opération effectuée des deux mains comprenant la tenue de l'appareil de traitement d'une main et le mouvement de l'autre main sur le dessus du dispositif tactile ;
modifier au moins une région associée au dispositif tactile selon que l'opération a été effectuée de la main droite, de la main gauche ou des deux mains sur le dispositif tactile ; et
modifier l'au moins une région associée au dispositif tactile en modifiant l'au moins une région invalide et l'au moins une région de décision selon que l'opération a été effectuée sur le dispositif tactile à l'aide de la main gauche ou de la main droite par l'utilisateur, une frontière entre les régions de décision en haut, en bas, à gauche et à droite du panneau tactile étant définie comme une paire de lignes courbes qui se coupent et forment entre elles la région invalide.

10. Unité d'enregistrement non transitoire lisible par ordinateur sur laquelle sont enregistrées des instructions d'un programme lisibles par ordinateur, les instructions, une fois exécutées par un processeur, amenant le processeur à réaliser le procédé selon la revendication 9.
